# EUROPEAN PATENT SPECIFICATION

(11) **EP 1 481 124 B1**
(45) Date of publication and mention of the grant of the patent: **04.09.2013**
(21) Application number: 03708291.4
(22) Date of filing: 28.02.2003
(51) Int. Cl.: D21C 11/00, D21C 3/04, D21C 3/20, D21C 11/10

(54) **PROCESS FOR PRODUCING FURFURAL, FORMIC ACID AND ACETIC ACID FROM SPENT PULP-COOKING LIQUOR**
VERFAHREN ZUR HERSTELLUNG VON FURFURAL, AMEISENSÄURE UND ESSIGSÄURE AUS GEBRAUCHTER ZELLSTOFFKOCHLAUGE
PROCEDE DE PRODUCTION DE FURFURAL, D'ACIDE FORMIQUE ET D'ACIDE ACETIQUE A PARTIR D'UNE LIQUEUR NOIRE DERIVEE DE LA CUISSON DE LA PATE A PAPIER

(30) Priority: 01.03.2002 FI 20020401
(43) Date of publication of application: 01.12.2004
(73) Proprietor: Chempolis Oy, 90660 Oulu (FI)
(72) Inventor: ROUSU, Pasi, FI-90660 Oulu (FI); ANTTILA, Juha, FIN-90230 Oulu (FI); TANSKANEN, Juha, FIN-90540 Oulu (FI); ROUSU, Esa, FIN-90230 Oulu (FI)
(74) Representative: Puranen, Maija-Liisa
(86) International application number: PCT/FI2003/000149
(87) International publication number: WO 2003/074781

(56) References cited:
- WO-A1-02/053829
- US-A- 4 088 660
- US-A- 4 401 514
- US-A- 4 916 242
- US-A- 5 415 732

## Description

### BACKGROUND OF THE INVENTION

The invention relates to the recovery of cooking chemicals and the preparation of furfural in pulping processes based on organic chemicals, particularly in formic-acid- and acetic-acid-based processes. In the process according to the invention, conditions have been arranged in connection with the recovery of cooking acids that allow formation of more cooking acids and at the same time furfural from the dissolved hemicellulose and lignin contained in the spent cooking liquor. At the same time, de-esterification makes it possible to release acids bound in the dissolved material to replace losses of cooking chemicals. The furfural and the acids are separated from one another by distillation. Part of the furfural is utilized in the process according to the invention as an extractant in distillation and the rest of the furfural is sold as a commercial product.

Generally, furfural has been prepared from agricultural waste materials, such as maize straw and sugar cane. The production processes used are based on acid-catalyzed hydrolysis of pentosans in plant materials and acid-catalyzed dehydration of the obtained pentoses to furfural. Finnish Patent 54,923 and US Patent 4,401,514 describe production processes of furfural, in which the catalyst used is either sulphuric acid or organic acids, mainly acetic acid, which is produced in the hydrolysis *in situ.* Also other acids, e.g. orthophosphoric acid, have been proposed to serve as the catalyst (Zeitsch, K.J., The Chemistry and technology of furfural and its many by-products, El-sevier Science B.V., Amsterdam, the Netherlands, 2000, p. 61). In a process based on sulphuric acid, the temperature is typically 153°C and in a process based on acetic acid 180 °C (Zeitsch, K.J., The Chemistry and technology of furfural and its many by-products, Elsevier Science B.V., Amsterdam, The Netherlands, 2000, pp. 300-304). For improved yield of furfural, it has been proposed forth that the reaction temperature should be over 200°C (e.g. US Patent 4,912,237). All these processes utilize acids at high temperatures (150 to 180 °C), wherefore the reaction mixtures are highly corrosive. High pressures and corrosion increase the investment costs of reactors. In addition, in these processes most of raw material (cellulose and lignin) remains unutilised.

Furfural has also been produced from waste liquor of a sulphite pulping process. These processes are also based on acid-catalyzed hydrolysis of pentoses. The acids contained in the sulphite liquor serve as the catalyst and the reaction temperature is 180 °C, for instance. In these processes the yield of furfural remains low, however, and deposits caused by inorganic compounds in the liquors foul the apparatuses (Zeitsch, K.J., The Chemistry and technology of furfural and its many by-products, Elsevier Science B.V., Amsterdam, The Netherlands, 2000, pp. 61-74).

It has been suggested that furfural be produced as a by-product from acidic organosolv-processes, in which pulp is produced by means of organic solvents. Examples of the solvents are ethanol (WO 9315261) or acetic acid (Lehnen, R, Saake, B. & Nimz, H.H., Furfural and Hydroxymethylfurfural as By-Products of Formacell Pulping, Holzforschung 55(2), 2001, 199-204). In the cooking stage of these processes, lignin and some of the hemicelluloses decompose by acid catalysis and dissolve in the cooking liquor. At the same time some of the dissolved pentoses are dehydrated to furfural. It has been set forth that in these processes the recovery of the cooking chemicals is based on evaporation and distillation and the furfural to be productized is to be separated in connection with the distillation.

To produce furfural as a part of an organosolv-type cooking process involves several problems. It is almost impossible to affect the formation of furfural and the other reactions of furfural, because pulp production determines the reaction conditions. If considerable quantities of furfural are produced in the cooking step, at the same time part of the produced furfural will unavoidably react further to polymers, which hamper bleaching of pulp and cause furfural losses. This has been found, for instance, when pulp is prepared by means of acetic acid (Zil'bergleit, M.A. & Glushko, T.V., Products from Polymerization of Furfural and Hydroxymethylfurfural in Acetic Acid, Khimia Drevesiny (Riga), 1991 (1), pp. 66-68). Polymerization reactions of furfural are slower, however, than the formation of furfural (Root, D.F., Saeman, J.F. & Harris, J.F., Kinetics of the Acid-catalyzed Conversion of Xylose to Furfural, Forest Products Journal, 9 (1959), pp. 158-165). If considerable quantities of furfural are produced in the cooking step, vapours from the evaporation of the cooking liquor cannot be recycled as such to the cooking, but most of the vapours from the evaporation of the cooking liquor must be distilled so that the furfural content of the cooking liquor will not rise excessively. This increases the investment and operating costs of the distillery.

It has been set forth that in formic-acid- and acetic-acid-based organosolv-processes the recovery of acids from the cooking liquor is based on evaporating the liquor and drying the concentrated liquor by spray drying, for instance, (Pohjanvesi, S. et al., Technical and economical feasibility study of the Milox process, the 8th International Symposium on Wood and Pulping Chemistry, June 6-9, 1995, Helsinki, vol. 2, pp. 231-237); and EP 0 584 675 A1 (Nimtz H.H.H & Schöne, M.). It has been set forth that the dry solids content of the evaporated cooking liquor prior to drying is 50 to 60%. In conventional alkaline pulping processes the cooking liquor is not dried separately, but the liquor is only evaporated to the highest possible dry solids content prior to burning. The dry solids content to be achieved by the alkaline processes depends substantially on the raw material used: in practice, for nonwood raw materials the maximum dry solids content of black liquor is about 40 to 50% (Zhong, X-J., Marching onwards into the 21st century - prospective view of the Chinese pulp and paper industry. Proceedings of the 4th International Nonwood Fibre Pulping and Papermaking Conference, Jinan, China, 2000, 1:43-51) and for wood about 80% (Holmlund, K. & Parviainen, K., Evaporation of black liquor, Papermaking Science Technology 6B. Chemical Pulping, ed. by Gullichsen, J. & Fogelholm, C.J., Fapet Oy, Helsinki, Finland, 1999, pp.35-93).

In all industrial production processes of furfural, the product stream of the furfural reactor contains more than 90% water and at most 6% furfural and various by-products, such as acetic acid. Typically, from this stream are separated, as specific fractions, furfural, heavy polymers, compounds with low boiling point and a mixture of water and organic acids that is either treated in a biological purification installation (Zeitsch, K. J., The Chemistry and technology of furfural and its many by-products, Elsevier Science B.V., Amsterdam, the Netherlands, 2000, p. 92) or separated e.g. by vacuum distillation (US 4,088,660) or by azeotropic distillation using butyl acetate as a separating agent (Hegner, B., Hesse, D. & Wolf, D., Chemie-Ingenieur-Technik 45 (1973), 942-945). Separation of this kind is expensive, however, because the separation feed stream contains only small amounts of furfural and organic acids to be separated. Also in the organosolv-processes furfural is to be separated by distillation in connection with the recovery of cooking chemicals. In these processes the feed of distillation consists of chemicals to be recovered, water and a relatively small quantity of furfural. These separations are to be performed by conventional distillation.

### DEFINITIONS ASSOCIATED WITH THE INVENTION

The term "azeotrope" refers to a mixture of substances, in which the vapour and liquid compositions are identical in equilibrium. An azeotrope corresponds to an extreme point (minimum, maximum, saddle point) on the boiling temperature isobar or on the vapour pressure isotherm.

The term "azeotropic distillation" refers either to the distillation of azeotropic mixtures or to distillation in which an azeotrope-forming component, a so-called entrainer, is added to the process.

The term "extractive distillation" refers to distillation in which a fully soluble, non-azeotropic-forming component ("entrainer") having a relatively high boiling point is added to a distilling column above the actual feed stream.

The term " heteroazeotrope" refers to an azeotrope in which there are two liquid phases present in addition to the vapour phase.

The term "heteroazeotropic distillation" refers either to distillation of heteroazeotropic mixtures or to distillation in which a heteroazeotrope-forming component ("entrainer") is added to the process.

The term "heteroazeotropic extractive distillation" refers to the combination of the heteroazeotropic distillation and the extractive distillation. The component to be added, having a relatively high boiling point, is selective and fully soluble with one or more components, having a lower boiling point, of a mixture to be separated and forms an azeotrope with one of the remaining components.

The term "thermal separation processes" refers to separation of two or more components from a mixture containing them by means of heat utilizing the different boiling points of the components. Examples of thermal separation processes include evaporation and crystallization.

The term "de-esterification" refers to the ester hydrolysis, i.e. to the conversion of chemically bound, ester-form acids into free acids.

### BRIEF DESCRIPTION OF THE INVENTION

The object of the invention is thus to provide a pulping process based on organic chemicals, for improved formation of furfural in the recovery of cooking chemicals and separation of furfural as a commercial product. The invention is based on the idea that in the recovery step of the cooking chemicals more furfural and cooking chemicals are formed in the spent cooking liquor by means of reactive evaporation utilizing recycling of the cooking liquor in the evaporation step.

The object of the invention is achieved with a process, which is characterized by what is disclosed in the independent claim. The preferred embodiments of the invention are disclosed in the dependent claims.

Now, it has been surprisingly found that cooking liquor obtainable from a formic-acid-based pulping process utilizing nonwood raw material can be evaporated to a dry solids content exceeding 90%, and at the same time, pentoses contained in the cooking liquor can be reacted almost completely, thus producing furfural, formic acid and acetic acid.

The process of the invention combines the recovery of the cooking acid and the dissolved dry substance in a novel manner so that furfural can be prepared more effectively than before from the pentoses dissolved in the cooking liquor. In the recovery of the cooking chemicals, a catalytic action of concentrated formic acid is utilized, and surprisingly, it has been found that the pentoses react almost completely at 110 to 130 °C already, and the reaction products produced are furfural, acetic acid and formic acid. The formation of furfural is particularly advantageous in the formic-acid-based process, in which acetic acid can serve as an auxiliary acid. Thus, losses of cooking chemicals can be eliminated within the production process and furfural and acetic acid will be obtained as by-products.

The furfural formed in the process of the invention is recovered by utilizing distillation. Part of the formed furfural is utilized in distillation as a separating agent in the separation of formic acid, acetic acid and water, and part of the furfural is separated as a specific product fraction. Also acetic acid is recovered in the process. The process utilizes the dual capability of the furfural to act both as an extractant in acid concentration and as a former of azeotrope in separating water in order to produce as pure a water fraction as possible.

### BRIEF DESCRIPTION OF THE DRAWINGS

Figure 1 shows a reactive evaporation unit that is useful in the process of the invention and associated with Example 5.

Figure 2 shows a reference evaporation unit associated with Example 5.

Figure 3 shows a distillation application associated with Example 6, in which formic acid and acetic acid and furfural are separated from the bottom of the first column and a furfural product is separated from the bottom of a furfural column.

Figure 4 shows a second distillation application associated with Example 6, in which the first column is implemented as a dividing wall column, acetic acid is separated with a sidestream rectifier and a furfural product is separated from the bottom of the dividing wall column.

### DETAILED DESCRIPTION OF THE INVENTION

The invention relates to a process for producing furfural and for forming furfural, formic acid and acetic acid, and for recovering formic acid and acetic acid in a pulping process, which utilizes an acid mixture, mainly containing formic acid and acetic acid, as the cooking chemical,
the process comprising a pulping stage, separation of the cooking liquor from the pulp, washing the pulp with a washing liquid, separation of the washing liquid from the pulp, recovery of the cooking chemicals and separation of the furfural, and the process comprising
(a) evaporating the spent cooking liquor obtained from the separation of the cooking liquor and the pulp, whereby the vaporized mixture obtained is a concentrated mixture of formic acid and acetic acid, which is at least partly returned to the cooking and possibly to the pulp washing, and the evaporation residue obtained is an evaporation concentrate, in which acetic acid, formic acid and furfural are formed during evaporation from the organic material contained in the cooking liquor and/or the chemically bound acids contained therein,
(b) separating the evaporation concentrate, if so desired, into a volatile part and an evaporation residue,
(c) separating water, acetic acid, furfural and a mixture of formic acid and acetic acid from the volatile part and possibly part of the vaporized mixtures from the evaporation (a) by distillation, whereby the distillation includes an azeotropic extractive distillation step by utilizing the furfural formed and recovered in the process,
(d) returning the water back to the processing of pulp, returning part of the furfural to the distillation of step (c), returning the mixture of formic acid and acetic acid to the pulp cooking and/or washing step and recovering the rest of the furfural and the acetic acid.

The process of the invention is characterized in that the evaporation (a) is carried out at least Partly as reactive evaporation at a temperature of 50 to 200 °C by recycling the spent cooking liquor in the internal circulation of an evaporator/evaporators, whereby more furfural, formic acid and acetic acid is formed from the dissolved organic matter contained in the cooking liquor and/or from chemically bound acids contained therein, whereby the process comprises, prior to the separation step (b), step (a0), in which the evaporation concentrate is allowed to react without evaporation and which is performed in connection with the reactive evaporation in a separate space connected to the internal circulation of the evaporator(s).

The process of the invention utilizes recycling in the reactive separation, whereby the recycling step also serves as an active reaction step.

In connection with the present invention, the term "spent cooking liquor" refers to the cooking liquor from cooking, from which the pulp is removed. In addition to the cooking chemicals, i.e. formic acid and acetic acid, and the water, the spent cooking liquor contains organic matter originating from the raw material of the pulp. The organic matter contained in the cooking liquor is mainly dissolved organic matter, but also solid fines can migrate together with the liquor. The dissolved organic matter contained in the cooking liquor mainly consists of hemicellulose and lignin, which have been dissolved during the cooking in the cooking liquor from the plant material used as raw material for pulp. The hemicellulose contains considerable amounts of xylose and/or other pentoses. The cooking liquor may also contain chemically bound acids in ester form.

The term "reactive evaporation" refers to a unit operation, in which both evaporation and chemical reactions take place. In the present invention, in connection with the reactive evaporation, the dry solids content of the cooking liquor used is raised and at the same time there is formed more furfural, acetic acid and formic acid from the organic matter contained therein, and, at the same time, formed furfural is removed. The furfural is removed from the reaction mixture by evaporation.

In connection with the present invention, the term "vaporized mixture" refers to the volatile part removed by evaporation, which can be in the form of a liquid or a vapour.

In the process of the invention, chemical pulp is prepared by cooking cellulose-rich plant material in a mixture containing organic acid and water. Organic acids usable in the invention are short-chained organic acids. Typically, the organic acid is formic acid. Part of the formic acid can be replaced by acetic acid, which is typically produced in the cooking step. The cooking acid typically contains 10 to 90% formic acid, 0 to 90% acetic acid and 10 to 50% water, the cooking time is typically 10 to 90 minutes and the cooking temperature is 85 to 150 °C. In these conditions it is possible to achieve effective and selective delignification. At the same time, only a small part of pentoses dissolving in the cooking liquor will react to furfural.

One typical cooking chemical composition comprises 80 to 40% formic acid and 8 to 50% acetic acid, preferably 10 to 40% acetic acid, the rest being water.

The process of the invention also works with cooking acid compositions containing only either formic acid or acetic acid, i.e. the amount of formic acid and acetic acid may vary within the range of 0 to 100%.

After cooking the cooking liquor and the acids are typically separated from the chemical pulp by pressing and washing.

The pulp washing can be carried out by known methods, for instance such that the dissolved matter is first washed from the pulp with an acid, and thereafter, the acid is washed from the pulp with water. The filtrate obtained from washing with water contains 10 to 80% acids, depending on the amount of wash liquid and the washing equipment used. The acid concentration of this filtrate is lower than that of the cooking liquor.

Alternatively, the pulp can be washed such that the dissolved matter is first washed from the pulp with an acid. Thereafter, the acid is evaporated from the pulp and the residual acid is washed from the pulp with water. The filtrate obtained from washing with water contains 1 to 50% acids, depending on the dry solids content of the pulp after the evaporation, the amount of wash liquid and the washing equipment used.

In one embodiment of the invention, prior to the washing with water, the pulp is washed with an acid or a mixture of acids and evaporated to a dry solids content of 30 to 95%.

The obtained washing filtrates can be utilized in the evaporation step (a) of the present invention in a manner that will be described later on in the text.

In step (a) of the process according to the invention, the spent cooking liquor obtained from the separation of the cooking liquor and the pulp is evaporated. Thus is obtained a concentrated mixture of formic acid and acetic acid, which is returned at least in part to the cooking and possibly to the pulp washing. In addition, as the evaporation residue there is obtained an evaporation concentrate that contains formic acid, acetic acid and furfural formed during the evaporation from the organic matter contained in the cooking liquor and/or chemically bound acids contained therein.

The process may also contain an optional pre-concentration step prior to the evaporation step (a). In the pre-concentration step, most of the cooking acids are recovered by evaporating the cooking liquor, typically in partial vacuum at a temperature of 45 to 110 °C. The obtained vaporized mixtures are re-used as a cooking acid. Furfural is formed thereafter in the subsequent evaporation, when the concentrated liquor is evaporated, whereby the produced furfural will not accumulate in the cooking liquor and the yield of furfural can be maximized. In this manner, it is possible to directly reuse 50 to 95% of the cooking acids and the cooking acid composition contains less than 1% furfural. 1.

In the process of the invention, the evaporation (a) is carried out at least partly as reactive evaporation by recycling the spent cooking liquor in the internal circulation of an evaporator/evaporators, whereby the dissolved organic matter contained in the cooking liquor and/or chemically bound acids contained therein form more furfural, formic acid and acetic acid.

The evaporation (a) may also include other, conventional evaporation steps.

In addition, the process of the invention includes, prior to separation step (b), step (a0) in which the evaporation concentrate is allowed to react without evaporation, whereby there is formed more furfural, formic acid and acetic acid in the evaporation concentrate.

In a accordance with the present in-vention, the additional reaction step (a0) is performed in connection with the evaporation in a separate space, such as a separate container, which is connected to the internal circulation of the evapo-rator(s). In this manner, the residence time of the spent cooking liquor becomes longer in the evaporator and more furfural, formic acid and acetic acid is formed in the evaporation concentrate.

The reaction space does not require separate heating, because the evaporation temperature can be used as the reaction temperature. Thus, all the energy can be utilized in the recovery of chemicals. In these conditions the pentoses of the cooking liquor will react to furfural, and at the same time, there is produced formic and acetic acids.

The evaporation can be carried out, for instance, in a thinfilm evaporator, a falling film evaporator and a forced circulation evaporator.

The evaporation of step (a) is typically performed to a dry solids content of 20 to 95%, preferably 50 to 95%. The evaporation is preferably performed to the highest possible dry solids content, but the process works also when the dry solids content is low. In some organosolv methods, the dry solids content of the cooking liquor to be fed into the evaporation can be even less than 5%, whereby evaporation to a dry solids content of e.g. 20% is vi-able.

The evaporation temperature of step (a) as well as the reaction temperature of step (a0) are typically within the range of 50 to 200 °C. The evaporation (a) and the relating reactions (a0) are typically performed at a temperature exceeding 90 °C, preferably at a temperature of 90 to 160°C, particularly preferably at a temperature of 100 to 140 °C. The residence time in the evaporators is typically 0.5 min to 24 h, preferably 30 min to 5 h. The lower limit of 0.5 min of the residence time may be appropriate at high reaction temperatures, such as 200 °C.

If desired, it is possible to monitor the formation of furfural, formic acid and acetic acid by measuring the pentose or xylose content of the evaporation concentrate. Advantageously, the evaporation will be continued until the evaporation concentrate no more substantially contains pentoses or xylose.

The yield of furfural can be increased and acid formation can be accelerated by lowering the acid concentration of the reacting cooking liquor. The efficiency of the process can thus be increased by mixing water or water/acid mixture in the liquor to be evaporated. The water/acid mixture can be the filtrate, mentioned in the above, obtained from the pulp washing. Thus, the pentoses will react more selectively to furfural and the formation of acids will speed up. The cooking liquor is concentrated to the final dry solids content (>90%) either by evaporation or by drying subsequent to the evaporation steps. When necessary, it is possible to separate lignin from the pentoses and the furfural to be produced by precipitation, for instance by cooling.

In one embodiment of the invention, water or a mixture of water and organic acids is thus mixed in the concentrated cooking liquor as a liquid or vapour. This mixture is evaporated and the components of the mixture are allowed to react to furfural and organic acids. The evaporation and the desired reactions are implemented in the above-described manner, typically e.g. in a separate space between the evaporation steps, in a circulation container of the evaporator acting as a reactor or in a separate reactor after the liquor heating step of the forced circulation evaporator, or as a combination of these methods. The reaction temperature is typically 90 to 180 °C, the overall reaction time is 0.1 to 10 hours, the dry solids content of the mixture is 10 to 95% and the acid concentration is 5 to 90%.

In the evaporators used for concentration of the cooking liquor, the liquor is circulated in the evaporators and only a minor part of the evaporation takes place in one pass of the liquor circulation. These evaporators preferably comprise a separate space, through which the liquor is circulated and/or from which the liquor is conveyed to a next evaporation step. One example of these evaporators is a conventional falling-film-type evaporator. The liquor is reacted in this space and/or for making the residence time longer and for enhancing the reactions this space is alternatively increased and/or the liquor is circulated via a separate container. The reaction temperature is typically 90 to 160 °C, the dry solids content is 20 to 95% and the overall reaction time is 0.1 to 10 hours. The nascent furfural evaporates in the evaporation, so furfural is removed from the reaction system while it is being produced. This increases the yield of furfural, because further reactions of furfural will be prevented.

Also in forced circulation evaporators the liquor is circulated in the evaporator and only a minor part of evaporation takes place in one pass of the liquor circulation. In the forced circulation evaporators the circulating liquor is heated with a separate heater, whereafter the liquor is evaporated by flash evaporation. In the process of the invention, after heating it is possible to allow the liquor to react in a separate reactor, for instance, in a container or a tubular reactor, prior to the flash evaporation. The reaction temperature is typically 100 to 180 °C, the dry solids content is 20 to 95% and the overall reaction time is 0.01. to 5 hours. In this manner it is possible to enhance the reactions and make them proceed to a higher conversion, which increases the production of furfural and acids. The evaporation and the desired reactions can also be implemented as a combination of conventional evaporation, a separate reactor between evaporation steps, a circulation container of the evaporator serving as a reactor and a separate reactor after the heating step of the liquor in the forced circulation evaporator.

In one embodiment of the invention, pulp washing filtrate is mixed with the concentrated cooking liquor so as to reduce the acid concentration of the liquor and to enhance the reactions. The pulp washing filtrate can be obtained, for instance, from a pulp washing process, in which the dissolved matter is first washed from the pulp with an acid and thereafter the acid is washed from the pulp with water. The filtrate obtained from the washing with water contains 10 to 80% acids, depending on the amount of wash liquid and the washing equipment used. The acid concentration of this filtrate is lower than that of the concentrated cooking liquor.

The mixture containing this filtrate and the concentrated cooking liquor is evaporated and the components of the mixture are allowed to react to furfural and organic acids in the above-described manners. The reaction temperature is typically 90 to 180 °C, the overall reaction time is 0.1 to 10 hours, the dry solids content of the mixture is 10 to 95% and the acid concentration is 10 to 90%. When internal streams of the process are utilized in this manner, it is possible to eliminate the use of external water and/or water/acid streams, which reduces the costs of chemicals and recovery.

Alternatively, it is possible to use a washing filtrate, in which the dissolved matter has first been washed from the pulp with an acid and thereafter the acid has been evaporated from the pulp and the residual acid has been washed from the pulp with water. The filtrate obtained from the washing with water contains 1 to 50% acids, depending on the post-evaporation dry solids content of the pulp, the amount of wash liquid used and the washing equipment.

This filtrate is mixed with the concentrated cooking liquor, the mixture is evaporated and the components of the mixture are allowed to react to furfural and organic acids in the above-described manners. The reaction temperature is typically 90 to 180 °C, the overall reaction time is 0.1 to 10 hours, the dry solids content of the mixture is 10 to 95% and the acid concentration is 3 to 80%. In this manner it is possible to further improve the yield of furfural and speed up the acid production without extra chemicals or process streams. In addition, the recovery costs of the furfural and the acids are reduced, because the flow rate of the feed stream in the distillation step reduces.

The evaporation (a) may also comprise drying for further increasing the dry solids content of the evaporation concentrate. The drying is typically performed at a temperature of over 100 °C at normal atmospheric pressure or at overpressure, or at low pressure at a temperature below 120 °C. The drying can be implemented using the known art, for instance spray drying or indirect drying methods.

In an advantageous embodiment of the invention, separate drying is omitted. The cooking liquor is concentrated directly by evaporating it to a high, 70 to 95% dry solids content. No separate dryer is needed, whereby the investment costs of the recovery decrease. Also the energy consumption decreases, because all the liquor concentration can be implemented by energy-integrated multistage evaporation. The yield of furfural increases. When the evaporation and the reactions take place as the dry solids content is high, the furfural content of the product mixture is higher than as the dry solids content is low. Thus a larger part of the formed furfural is recovered directly as condensates and correspondingly the amount of furfural circulating in the evaporator decreases. This reduces the furfural losses, because it is less possible for the furfural to react further. Moreover, the size of the reactor is also reduced. When the reactions take place as the dry solids content is high, smaller reaction volume is required than as the dry solids content is low.

In step (b) of the process according to the invention, the evaporation concentrate is separated, if desired, into a volatile part and an evaporation residue. Even though the furfural formed in the reactive evaporation (a) evaporates naturally, furfural and acids remain in the evaporation concentrate and they have to be separated into a volatile part and an evaporation residue by evaporating and/or drying, for instance.

From the volatile part of the evaporation concentrate and possibly from part of the vaporized mixture of the evaporation (a), water, acetic acid, furfural and the mixture of the acetic and formic acids are separated by distillation, whereby the distillation comprises an azeotropic extractive distillation step by utilizing the furfural formed and recovered in the process.

The vaporized mixtures from the evaporation (a) have to be distilled, for instance, when the cooking requires a highly concentrated acid. There is no other way to provide a sufficiently high acid concentration in the cooking acid mixture.

The azeotropic extractive distillation step of the distillation step (c) is typically carried out as the first step of distillation.

In one distillation alternative, a mixture of water and furfural is separated from the volatile part of the evaporation concentrate, obtained in step (b), on the column top in the first distillation column. From the bottom of the column is separated a mixture containing furfural, acetic acid, formic acid and water. In subsequent steps will be separated a mixture of formic and acetic acids, acetic acid and furfural.

The distillation is typically carried out in three columns such that (1) from the bottom of the first column is separated a mixture of formic and acetic acids and furfural, and from the top is separated a mixture of water and furfural, (2) the bottom product of the first column is passed to the second column, from the bottom of which is separated acetic acid and furfural, and from the top is separated a concentrated mixture of formic and acetic acids, and (3) the bottom product of the second column is passed to the third column, from the bottom of which is separated furfural and from the top acetic acid, and part of the furfural separated from the bottom is recycled to the first column to serve as an extractant and the rest is recovered as a furfural product.

It is also possible to proceed such that from the first column is separated a mixture of formic and acetic acids as a side stream. In connection with the present invention, the term "side stream" refers to withdrawing a stream from the distillation column from any other stage than the reboiler or the condenser, either as a liquid or a vapour.

In a second embodiment of the invention the first distillation column is implemented as a dividing wall column, and the mixture of formic and acetic acids is separated as a side stream from the first column, the furfural is separated from the bottom of the second column and the furfural is returned to the first column to serve as an extractant. In connection with the present invention the term "dividing wall column" refers to a column, in which part of the column is vertically divided in two parts with a partition wall. The first part of the dividing wall column constitutes a so-called pre-fractionating section.

An alternative to the dividing wall column is a so-called Petlyuk concept, in which the pre-fractionating section of the dividing wall column is replaced by a separate pre-fractionation column. This column operates without own reboiler or condenser. In this case the actual column is not provided with a dividing wall. The top product of the pre-fractionating column is fed to the upper part of the subsequent column and the bottom product to the lower part.

The top product of the first column of the distillation is separated into water and furfural fractions by decantation, the furfural fraction is returned to the first column and the water fraction is conveyed to the column, whose bottom product is water and the top product is a mixture containing water and furfural.

In one embodiment of the invention, furfural is separated from the bottom of the second column and acetic acid from the second column with a sidestream rectifier, and the furfural is returned to the first column to serve as an extractant.

In the dividing wall solution the furfural can be separated from the bottom of the dividing wall column and/or the acetic acid from the dividing wall column with a sidestream rectifier, and the furfural is returned to the dividing wall column to serve as an extractant.

In one additional embodiment of the invention the furfural separated from the bottom of the second or third column or from the dividing wall column is returned in full to the first column to serve as an extractant and from the furfural fraction from decantation is separated a furfural product.

The furfural fraction from decantation to be obtained from the first column can also be conveyed to the column, whose bottom product is furfural and the top product is a mixture containing water and furfural. The mixture of water and furfural is returned to decantation.

The water fraction obtained from distillation is recycled to pulp processing, such as cooking, washing, bleaching or screening stage.

The pressure in the distillation columns is typically within the range of 1 to 5 bar. The distillation columns can also operate at low pressure.

It is also possible to combine e.g. pulp washing filtrates to the stream to be distilled. Separation of the furfural to be produced is combined in the distillery installation to the concentration of acids, purification of water and separation of acetic acid obtainable as a by-product. The separation of furfural, acids and water utilizes the capability of furfural to form a heterogeneous minimum azeotrope with water and the capability of furfural to extract acids from the water/acid mixture. The furfural is used at the same time both as an extractant and as an azeotrope former for separating water effectively from the acids.

In the following, practical applications of distillation are described in greater detail.

The vaporized mixtures obtained from the reactive evaporation of the process according to the invention and other streams to be distilled (for instance pulp washing filtrates) containing water, formic acid, acetic acid and/or furfural are conducted to the first column of the distillation. The total feed typically contains 1 to 30% furfural, 20 to 80% water, 5 to 70% formic acid and 1 to 70% acetic acid. Above the feed stream there is conducted a furfuralrich stream, which is obtained from the decantation of the top product of the first column and/or from the bottom of the second or third column. From the top of the first column there is obtained a mixture containing water and furfural, the composition of which approaches an azeotrope of water and furfural. The bottom product of the first column is a mixture containing furfural, formic acid, acetic acid and minor amounts of water.

The bottom product of the first column is conducted to the second column, the so-called acid column, whose top product is a concentrated acid and the bottom product is mainly a mixture containing acetic acid and furfural. The concentrated acid is typically used in the cooking stage of chemical pulping. The top product of the acid column contains only minor amounts of furfural and the bottom product only minor amounts of formic acid. The bottom product of the acid column is conducted to the third column, the so-called acetic acid column, whose top product is acetic acid and the bottom product is furfural. Part of the bottom product is withdrawn as a furfural product and part is returned to the first column.

Heavy fractions accompanying the feed and possibly produced in the distillation are accumulated at the bottom of the acetic acid column. For improved purity of the furfural product, the product stream is withdrawn as vapour before the reboiler, for instance from the second lowest stage of the acetic acid column. Part of the bottom product of the column can thus be withdrawn for removal of heavy fractions.

Alternatively, the separation of the acetic acid and the furfural can be implemented such that a steam flow is conducted from the lower part of the acid column to a separate sidestream rectifier, whose top product is acetic acid and bottom product is returned to the acid column. From the bottom of the acid column is thus obtained a furfural stream, one part of which is separated in the above-described manner to form a product stream, one part is returned to the first column and one part is withdrawn for removal of heavy fractions. If the amount of acetic acid in the acid column feed is small with respect to the amount of furfural to be separated, the use of a separate sidestream rectifier allows reduced energy consumption, in addition to a smaller number of reboilers.

The top product of the first column is separated into water and furfural fractions by decantation. The furfural fraction is returned to the first column and the water fraction is conducted to a so-called water column, whose bottom product is water and top product is a mixture of water and furfural. The purified water is used for washing the pulp, for instance, and the mixture of water and furfural is returned to decantation.

The furfural to be productized is separated, alternatively, from the top product of the first column such that part of the decanted furfural fraction is conducted to a so-called furfural column, whose bottom product is furfural and top product is a mixture containing water and furfural. The bottom product is withdrawn as a furfural product and the mixture containing water and furfural is returned to decantation. In this manner it is possible to lower the acidity of the furfural to be productized. Concentration of acids and recycling of furfural as well as separation of acetic acid and heavy fractions are implemented as described above. Thus, all the furfural obtained as the bottom product from the acid column or the acetic acid column is returned to the first column.

The process of the invention makes it possible that the operation of the first column is flexible in a wide pressure range, from low pressures to overpressures. The first column works particularly well, however, in the vicinity of normal atmospheric pressure or at minor overpressure. The pressure has no significant effect on the operation of other columns. By changing the pressure in the columns it is possible, however, to save in investment and operating costs. For instance, if the columns operate at low pressure, the investment costs of the columns will reduce, because the reduction of pressure and correspondingly that of the temperature will decrease corrosion caused by acids, whereby the columns can be made of cheaper materials. Pressure reduction also reduces coloration of the furfural product. The total energy consumption of the columns can be reduced by energy integration, which, in turn, can be enhanced by raising and/or lowering the pressure in some columns. The columns can thus operate advantageously either at low pressure or at overpressure, depending on the prices of the materials used in the structures or the energy, for instance.

In another application the distillation is alternatively implemented such that from the lower part of the first column is withdrawn, as side stream, a stream, which contains minor amounts of water and about 5 to 30% furfural. From the bottom of the column is obtained acid- and water-free furfural, part of which is returned to the top of the first column and part is withdrawn for removal of heavy fractions. From the top of the column is obtained a mixture of water and furfural. A concentrated mixed acid, acetic acid and furfural are separated from the side stream in the above-described manners. Part of the furfural obtained as the bottom product from the acid column or the acetic acid column is separated into a furfural product and part is returned to the first column. The top product of the first column is separated into water and furfural fractions in the manner described above and the furfural fraction is returned to the first column.

The furfural to be productized can also be separated from the top product of the first column in the above-described manner. Thus all the furfural obtained as the bottom product of the acid column or the acetic acid column is returned to the first column.

The above-described alternative allows reduction of energy consumption in the distillery. In addition, in this manner it is possible to prevent furfural from reacting in the reboilers. It is known that resinification of furfural is an acid-catalyzed reaction. In the reboiler of the first column there are no acids, so the reaction of furfural is prevented. In addition, the corrosive effect of the boiled liquid reduces as the liquid does not contain acids.

In an additional embodiment of the invention, the distillation is alternatively implemented such that the middle section of the first column is divided with a dividing wall into two parts. The distillation feed is conducted to the other side of the partition wall in the middle section of the column. The furfural is fed to the upper part of the column, above the partition wall. From the top of the column is obtained a mixture of water and furfural. The bottom product is a mixture of furfural and acetic acid. From the middle section of the column, on the opposite side of the dividing wall with respect to the feed, is obtained a concentrated mixed acid.

The bottom product of the dividing wall column is fed into the acetic acid column, where acetic acid and furfural as well as heavy fractions are separated in the above-described manner. Part of the furfural is returned to the first column. Alternatively, this separation can be carried out using a sidestream rectifier attached to the dividing wall column and connected to the dividing wall column below the partition wall. Thus, the acetic acid is obtained from the top of the sidestream rectifier and the furfural and the heavy fractions are obtained from the bottom of the dividing wall column in the same way as from the lower part of the above-described acid column. Using the dividing wall column it is possible to reduce the number of columns, which reduces the investment costs of the distillery installation.

Alternatively, the furfural to be productized is separated from the top product of the first column in the above-described manner. Thus all the furfural obtained as the bottom product from the dividing wall column or the acetic acid column is returned to the first column.

In the middle section of the dividing wall column, on the feed side, so-called pre-fractionating takes place, in which most part of the acids are separated from water and furfural. This pre-fractionating can be enhanced by conducting a small furfural stream to the upper part of the pre-fractionating section.

Alternatively, the separation to be performed in the dividing wall column can be implemented by a so-called Petlyuk concept. The pre-fractionating section of the dividing wall column is then implemented in a separate column, in a so-called pre-fractionating column, whose top product is fed to the upper part and the bottom product to the lower part of the subsequent column. The pre-fractionating column does not comprise a condenser or a reboiler, but to the pre-fractionating column is returned liquid from the upper part and vapour from the lower part of the column subsequent to the pre-fractionation.

The process of the invention advantageously uses herbaceous plants and hardwood as raw material. The herbaceous plants generally refer to non-wood fibre sources. The most important fibre sources include, for instance, straw, such as corn straw (rice, wheat, rye, oats, barley), grasses, such as esparto grass, sabai grass and lemon grass, reeds, such as papyrus, common reed, sugar cane, or bagasse, and bamboo, bast fibres, for instance, stems of fibre flax and seed flax, kenaf, jute and hemp, leaf fibres, for instance, manilla hemp and sisal, and seed hairs, such as cotton and cotton linter fibres. An important, useful raw material that grows in Finland is reed canary grass.

In the following the invention will be described by non-restrictive examples.

### Example 1

Selective delignification of cellulose-containing material without furfural formation

Bagasse was delignified in a mixture of formic and acetic acids (62% formic acid and 20% acetic acid) at 120 °C for 40 minutes. The liquid ratio was 5:1. After the cooking the liquor was separated from the pulp by pressing, whereafter the pulp was washed with acid and water. The kappa number and the pentosan content of the pulp, and the furfural content of the cooking liquor were determined. The kappa number of the pulp was 25 and the pentosan content was 10%. The cooking liquor contained 0.12% furfural. Thus, the bagasse was efficiently and selectively delignified, but only small quantities of furfural were produced.

This example proves that the cooking can be carried out with organic acids without furfural being formed.

### Example 2

Vacuum evaporation

Wheat straw was delignified in a mixture of formic and acetic acids. After the cooking, the separated cooking liquor contained 0.13% furfural and 7% dissolved dry matter. The liquor was concentrated with a falling-film evaporator at a pressure of 0.23 bar, at a temperature of about 70°C, up to a dry solids content of 50%. Even though the total evaporation time was 4 hours, the average furfural content of the vapours was only 0.16% and that of the final concentrate 0.30%, so the vacuum evaporation produced only small amounts of furfural.

This example proves that the pre-concentration can be implemented without furfural being formed.

### Example 3

Bagasse was delignified in a mixture of formic and acetic acids. After the cooking the separated liquor was concentrated by vacuum evaporation at a temperature of about 70 °C to a dry solids content of 28%. The liquor was allowed to react at 130 °C for 3 hours. The liquor was measured for formic acid and acetic acid contents (HCOOH and AcOH), furfural and xylose contents at the beginning of the experiments and after the reactions. The results are shown below in Table 1.

**Table 1. Reaction of concentrated cooking liquor at 130 °C**

| | HCOOH | AcOH | Furfural | Xylose |
|---|---|---|---|---|
| Concentration at the beginning, % by weight | 31.7 | 26.7 | 0.32 | 5.6 |
| Concentration at the end, % by weight | 33 | 29.2 | 1.6 | 1.5 |
| Formation, % by weight | 1.3 | 2.5 | 1.2 | |
| Formation, % by weight of original dry matter | 4.7 | 9.0 | 4.2 | |
| Conversion, % | | | | 72 |

This example shows that the concentrated cooking liquor reacts as such without additions of water or acid, for instance, between evaporation steps, whereby acids and furfural are produced. These reactions can be utilized in connection with the reactive evaporation according to the invention.

### Example 4

Reaction of the concentrated liquor with a water washing filtrate

(A) Cellulose-containing raw material was delignified with a mixture of formic and acetic acids. After the cooking, the liquor was separated from the pulp by pressing, whereafter the pulp was washed with an acid and water. After the acid and water washings, the pulp was pressed to a dry solids content of 35%. In the water washing the pulp was washed counter-currently in several washing stages, the dilution factor being 2. Alternatively, after the acid washing the pulp was evaporated to a dry solids content of 70% prior to water washing. Table 2 shows the compositions of the filtrates from water washing, when the pulp was washed by these methods.

**Table 2. Water washing of pulp**

| Pulp to water washing | | Filtrate from water washing | | |
|---|---|---|---|---|
| consistency, % by weight | acid concentration of liquid part, % by weight | flow rate kg/kgₚᵤₗₚ | acid concentration % by weight | acid flow rate, kg/kgₚᵤₗₚ |
| 35 | 80 | 3.9 | 39 | 1.5 |
| 70 | 80 | 2.4 | 14 | 0.3 |

On the basis of the values of Table 2, the amount of acid introduced in the filtrate from the water washing reduces substantially, when the consistency of the pulp entering the water washing is raised by evaporation.

(B) Wheat straw was delignified and the separated liquor was concentrated by vacuum evaporation in the manners described in Example 2 to a dry solids content of 60%. To the obtained concentrate was mixed water/acid mixture, whose composition and quantity corresponded to the filtrate obtained from the water washing of the evaporated pulp according to Table 2 (mixing ratio being 3 parts concentrate and 2 parts water/acid mixture). The dry solids content of this mixture was 31 % and it was allowed to react at 130 °C for 3 hours. The liquor was measured for acid, furfural and total pentose concentrations at the beginning of the experiments and after the reactions. The results are shown below in Table 3.

**Table 3. Reaction of the concentrated cooking liquor mixed with the water washing filtrate at 130 °C**

| | HCOOH | AcO H | Furfural | Pentoses |
|---|---|---|---|---|
| Concentration at the beginning, % by weight | 20.1 | 15.1 | 0.5 | 13.3 |
| Concentration at the end, % by weight | 21.3 | 18 | 2.8 | 4.5 |
| Formation, % by weight | 1.2 | 2.9 | 2.3 | |
| Formation, % by weight of original dry matter | 3.9 | 9.4 | 7.4 | |
| Conversion, % | | | | 66 |

On the basis of Tables 1 and 3, the yield of furfural improves, when the acid concentration of the reaction mixture is lowered but the dry solids content of the mixture remains the same.

This example shows that the reactions of the concentrated cooking liquor can be enhanced by lowering the acid concentration of the mixture. The acid concentration can be lowered by evaporating the pulp after the acid washing. These reactions can also be utilized in connection with the reactive evaporation according to the invention.

### Example 5

(A) Reaction of the concentrated liquor in connection with evaporator circulation in accordance with the invention

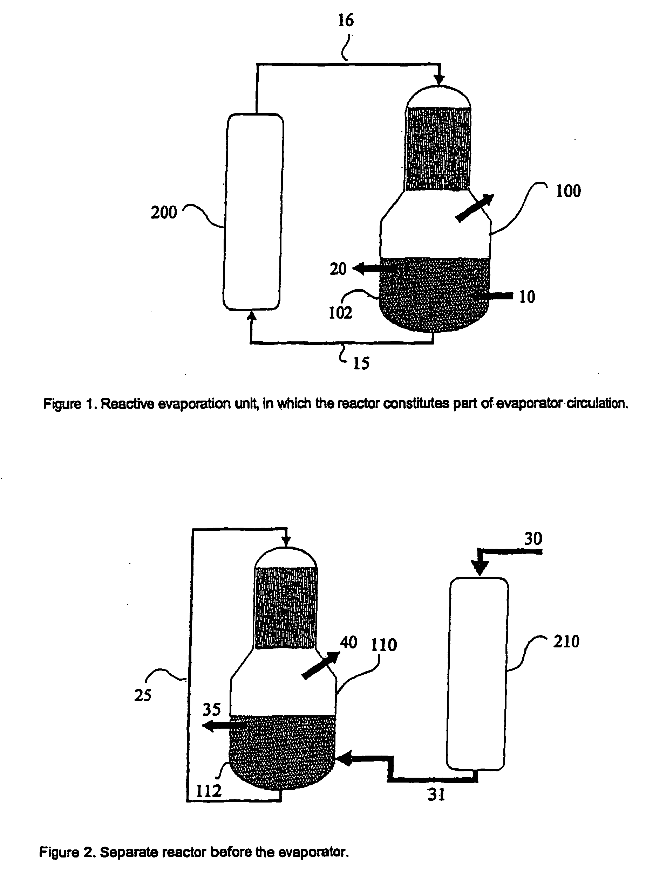

Figure 1 illustrates one example of a reactive evaporator structure useful in the process of the invention. A mixture of the concentrated cooking liquor and the filtrate from the water washing of pulp (mixing ratio 3:2) is evaporated in a falling-film-type evaporator.

The dry solids content of the feed is 50% and that of the product concentrate 85%. The liquor is circulated in the evaporator 100 (at a temperature of 130 °C) and only minor part of evaporation takes place during one pass of the liquor circulation. The liquor 10 to be concentrated is fed to the lower part 102 of the bottom chamber of the evaporator 100 and the concentrated liquor 20 is withdrawn from the upper part of the bottom chamber. In connection with the evaporator circulation (15, 16) there is a reactor 200, in which the liquor reacts at a temperature of 130 °C for a time corresponding to achieving the maximum of furfural content. The circulation ratio being 15, the furfural content has achieved its maximum in about 0.7 h.

Table 4 below shows the results as the mixture of the cooking liquor and the water washing filtrate reacts in the reactor for a time that allows achieving the maximum of the furfural content.

(B) Separate reactor before the evaporator reference example

For comparison, Table 4 also includes an alternative, in which the reactions mostly take place prior to evaporation. The structure of this alternative is shown in Figure 2. In this comparative solution, the liquor 30 to be concentrated is first conducted to a reactor 210 (temperature 130 °C, residence time 4 h), wherefrom the reacted liquor 31 is conducted to the lower part 112 of the bottom chamber of the evaporator 110. The liquor is circulated in the evaporator (temperature 130 °C) and the concentrated liquor 35 is withdrawn from the upper part of the bottom chamber. The furfural 40 evaporates in the evaporator together with the acids and the water.

**Table 4. Furfural reactor as part of evaporator circulation**

| Dry solids content of concentrate, % | | Structure | Furfural yield in vapours, % of feed dry matter |
|---|---|---|---|
| Feed | Product | | |
| 50 | 85 | Reactor connected to evaporator circulation | 10.3 |
| 50 | 85 | Reactor before evaporator | 8.0 |

According to Table 4, the yield of furfural can be improved by about 30%, when the dehydration of pentoses is carried out in connection with the evaporator circulation as compared with the alternative, in which the reactions take place in a separate reactor between the evaporation units.

### Example 6

Concentration of the cooking liquor to a high dry solids content, mixing with the water washing filtrate and distillation

Bagasse was delignified in a mixture of formic and acetic acids. After the cooking, separated liquor was concentrated by vacuum evaporation to a dry solids content of 26% using a falling-film evaporator. The concentrated cooking liquor batch was further evaporated using a so-called multicoil evaporator. The heating medium used was steam with a pressure of 5 bar, the heat of which was transferred into the liquor by using a heating coil. The dry solids content of the final liquor was 95%. To the concentrated cooking liquor was mixed water washing filtrate in the same manner as in Example 4. Reactive evaporation was performed on this mixture in the same manner as in Example 5, step (A). The volatile part obtained from the evaporation and the subsequent drying was conducted to distillation.
The distillation feed was as follows:

| | Contents, mol-% | | |
|---|---|---|---|
| | | Water | 63.3 |
| | | Formic acid | 20.1 |
| | | Acetic acid | 15.4 |
| | | Furfural | 1.3 |

### Distillation 1

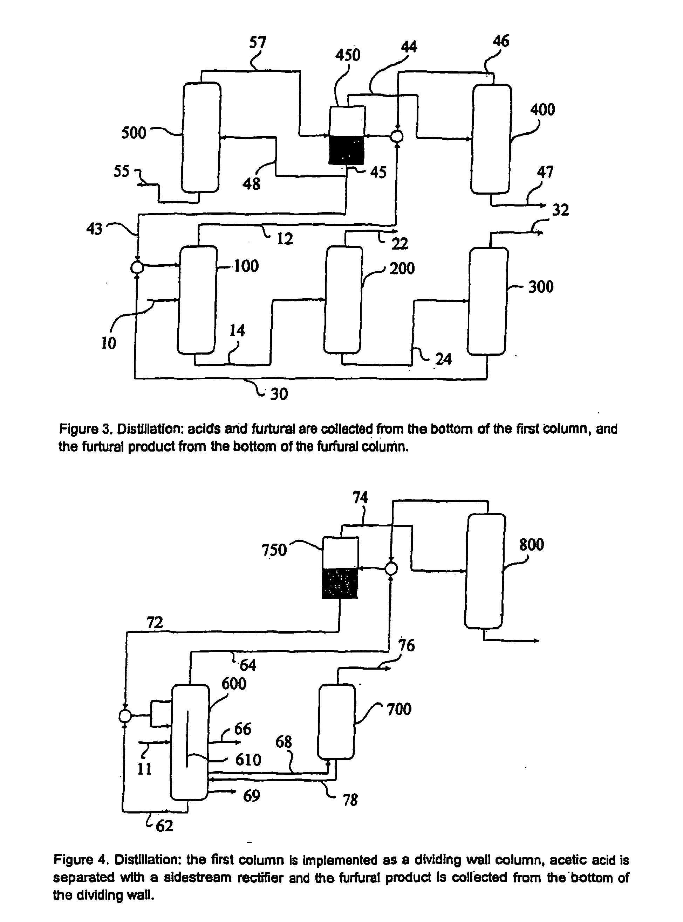

The structure of a distillery installation according to this example is shown in Figure 3.

Distillation feed 10 is conducted to a first distillation column 100, into which is also conducted furfural 30, 43 obtained from a third distillation column 300 and decantation 450. The top product 12 obtained is a mixture of water and furfural and the bottom product 14 is a mixture containing water, formic acid, acetic acid and furfural. The top product 12 of the first distillation column is decanted into a water fraction 44 and a furfural fraction 45. The water fraction 44 is conducted to a distillation column, to a so-called water column 400, whose top product is a mixture of water and furfural to be returned to decantation and the bottom product 47 is pure water. The furfural fraction 45 is conducted, in part (stream 43), back to the first column 100 and, in part (stream 48), to a distillation column 500, to a so-called furfural column, whose bottom product is a furfural product 55 and the top product 57 a mixture of water and furfural to be returned to the decantation 450.

The bottom product 14 of the first distillation column is conducted to a second distillation column 200, to a so-called acid column, whose top product 22 is concentrated mixed acid and the bottom product 24 is a mixture of acetic acid and furfural, which is conducted to a third distillation column 300, to a so-called acetic acid column. The top product 32 of the acetic acid column is acetic acid and the bottom product 30 is furfural that is returned to the first column. The pressure in all distillation columns is about 1 bar.

### Distillation 2

The structure of the distillery installation according to this example is shown in Figure 4.

Above-described feed 11 is fed into a first distillation column 600, whose middle section is divided by a partition wall 610. To the upper part of the column, above the partition wall, and to the partition wall area, above the feed, is fed furfural 72, 62 obtained from the decantation of the top product 64 of the first column and from the bottom of the dividing wall column. The top product 64 of the column is a mixture of water and furfural, from which water 74 is separated in the above-described manner. The furfural fraction 72 from the decantation is returned to the first column.

From the first column, from the opposite side of the partition wall with respect to the feed, is withdrawn concentrated mixed acid 66 as a side stream. From the lower part of the first column is withdrawn as a side stream 68 a steam mixture containing acetic acid and furfural. This mixture is conducted to a separate sidestream rectifier 700, whose top product 76 is acetic acid and the bottom product 78 is returned to the first column (to the same stage, from which the side stream was taken). The bottom product 62 of the first column is returned to the upper part of the first column. The furfural product is withdrawn as vapour as side stream 69 from the lower part of the dividing wall acid column below the side stream of the sidestream rectifier.

It is apparent to the person skilled in the art that as technology advances the basic idea of the invention can be implemented in a variety of ways. Thus, the invention and its embodiments are not restricted to the above-described examples, but they may vary within the scope of the claims.

## Claims

1. A process for producing furfural, for forming formic acid and acetic acid, and for recovering formic acid and acetic acid in a pulping process, which utilizes an acid mixture, mainly containing formic acid and acetic acid, as the cooking chemical,
the process comprising a pulping stage, separation of the cooking liquor from the pulp, washing the pulp with a washing liquid, separation of the washing liquid from the pulp, recovery of the cooking chemicals and separation of the furfural, and the process comprising
(a) evaporating the spent cooking liquor obtained from the separation of the cooking liquor and the pulp, whereby the vaporized mixture obtained is a concentrated mixture of formic acid and acetic acid, which is at least partly returned to the cooking and possibly to the pulp washing, and the evaporation residue obtained is an evaporation concentrate, in which acetic acid, formic acid and furfural are formed during evaporation from the organic material contained in the cooking liquor and/or the chemically bound acids contained therein,
(b) separating the evaporation concentrate, if so desired, into a volatile part and an evaporation residue,
(c) separating water, acetic acid, furfural and the mixture of formic acid and acetic acid from the volatile part and possibly part of the vaporized mixtures from the evaporation (a) by distillation, whereby the distillation includes an azeotropic extractive distillation step by utilizing the furfural formed and recovered in the process,
(d) returning the water back to the processing of pulp, returning part of the furfural to the distillation of step (c), returning the mixture of formic acid and acetic acid to the pulping stage and/or washing stage and recovering the rest of the furfural and the acetic acid,
**characterized in that** the evaporation (a) is carried out at least partly as reactive evaporation at a temperature of 50 to 200°C by recycling the spent cooking liquor in the internal circulation of an evaporator/evaporators, whereby more furfural, formic acid and acetic acid is formed from the dissolved organic matter contained in the cooking liquor and/or from chemically bound acids contained therein, whereby the process comprises, prior to the separation step (b), step (a0), in which the evaporation concentrate is allowed to react without evaporation and which is performed in connection with the reactive evaporation in a separate space connected to the internal circulation of the evaporator(s).

2. A process as claimed in claim 1, **characterized in that** the reactive evaporation of step (a) is performed to a dry solids content of 20 to 95%, advantageously 50 to 95%.

3. A process as claimed in claim 1, **characterized in that** the evaporation is performed at a temperature over 90 °C.

4. A process as claimed in claim 3, **characterized in that** the evaporation is performed at a temperature of 90 to 160 °C, advantageously 100 to 140°C.

5. A process as claimed in any one of the preceding claims, **characterized in that** the residence time in the evaporator is 0.5 min to 24 h, advantageously 30 min to 5 h.

6. A process as claimed in any one of the preceding claims, **characterized by** further comprising a pre-concentration step prior to the reactive evaporation of step (a).

7. A process as claimed in claim 6, **characterized in that** the pre-concentration is performed at a temperature of 45 to 110°C.

8. A process as claimed in any one of the preceding claims, **characterized in that** prior to or during the reactive evaporation (a) the process comprises step (a1), in which water or an acid/water mixture is added in the form of a liquid or a vapour to the evaporation concentrate.

9. A process as claimed in claim 8, **characterized in that** the acid/water mixture is filtrate from water washing of the pulp.

10. A process as claimed in claim 9, **characterized in that** prior to the water washing the pulp was washed with an acid or acid mixture and evaporated to a dry solids content of 30 to 95%.

11. A process as claimed in any one of the preceding claims, **characterized in that** an azeotropic extractive distillation step of the distillation step (c) is carried out as the first step of distillation.

12. A process as claimed in claim 11, **characterized in that** the distillation is performed in three columns such that (1) from the bottom of the first column is separated a mixture of formic and acetic acids and furfural and from the top is separated a mixture of water and furfural, (2) the bottom product of the first column is conducted to the second column, from the bottom of which is separated acetic acid and furfural and from the top is separated a concentrated mixture of formic and acetic acids, and (3) the bottom product of the second column is conducted to the third column, from the bottom of which is separated furfural and from the top acetic acid, and part of the furfural separated from the bottom is returned to the first column to serve as an extractant and the rest is recovered as a furfural product.

13. A process as claimed in claim 11 or 12, **characterized in that** the mixture of formic and acetic acids is separated from the first column as side stream.

14. A process as claimed in claim 11, **characterized in that** the first distillation step is performed using a dividing wall column, from which the mixture of formic and acetic acids is separated as side stream, furfural is separated from the bottom of the subsequent column and acetic acid from the top, and the furfural is returned to the dividing wall column to serve as an extractant.

15. A process as claimed in claim 14, **characterized in that** the pre-fractionating section of the dividing wall column is replaced by a separate pre-fractionating column.

16. A process as claimed in claim 15, **characterized in that** the top product of the pre-fractionating column is fed to the upper part and the bottom product to the lower part of the subsequent column.

17. A process as claimed in any one of claims 11 to 16, **charac- terized** in that the top product of the first column is separated into a water fraction and a furfural fraction by decantation, the furfural fraction is returned to the first column and the water fraction is conducted to a column, whose bottom product is water and top product is a mixture of water and furfural.

18. A process as claimed in claims 12 to 13 or 17, **characterized in that** the furfural is separated from the bottom of the second column and the acetic acid from the second column by a sidestream rectifier, and the furfural is returned to the first column to serve as an extractant.

19. A process as claimed in claim 14 or 17, **characterized in that** the furfural is separated from the bottom of the dividing wall column and/or the acetic acid from the dividing wall column by a sidestream rectifier, and the furfural is returned to the dividing wall column to serve as an extractant.

20. A process as claimed in any one of claims 12 to 19, **charac** - **terized** in that the furfural separated from the bottom of the second column or the third column or the dividing wall column is returned completely to the first column to serve as an extractant and from the furfural fraction from the decantation is separated the product furfural.

21. A process as claimed in claim 20, **characterized in that** the furfural fraction from the decantation is conducted to a column whose bottom product is furfural and top product is a mixture of water and furfural.

22. A process as claimed in claim 17 or 21, **characterized in that** the mixture of water and furfural is returned to decantation.

23. A process as claimed in any one of claims 11 to 22, **charac**- **terized** in that the pressure in the distillation columns is 1 to 5 bar.

24. A process as claimed in any one of claims 11 to 22, **charac** - **terized** in that the distillation columns operate at low pressure.

25. A process as claimed in any one of the preceding claims, **characterized in that in that** step (b) also comprises drying.

26. A process as claimed in claim 25, **characterized in that** the drying is performed at a temperature over 100 °C.

27. A process as claimed in claim 25, **characterized in that** the drying is performed at low pressure at a temperature below 120 °C.

## Patentansprüche

1. Verfahren zur Herstellung von Furfural, zur Bildung von Ameisensäure und Essigsäure und zur Rückgewinnung von Ameisensäure und Essigsäure in einem Kochverfahren, das eine Säuremischung, die hauptsächlich Ameisensäure und Essigsäure enthält, als Kochchemikalie nutzt,
welches Verfahren eine Kochstufe, das Trennen der Kochlauge vom Faserstoff, das Waschen des Faserstoffes mit einer Waschflüssigkeit, die Trennung der Waschflüssigkeit vom Faserstoff, die Rückgewinnung der Kochchemikalien und die Trennung des Furfurals enthält, und welches Verfahren enthält
(a) Verdampfen der verbrauchten Kochlauge, die aus der Trennung der Kochlauge und des Faserstoffes erhalten wird, wobei das erhaltene verdampfte Gemisch ein konzentriertes Gemisch von Ameisensäure und Essigsäure ist, welches zumindest teilweise zu dem Kochen und möglicherweise zum Waschen des Faserstoffes zurückgeführt wird, und der erhaltene Verdampfungsrest ein Verdampfungskonzentrat ist, in welchem Essigsäure, Ameisensäure und Furfural während der Verdampfung des in der Kochlauge enthaltenen organischen Materials und/oder der darin enthaltenen chemisch gebundenen Säuren gebildet werden,
(b) Trennen des Verdampfungskonzentrats, falls erwünscht, in einen flüchtigen Teil und einen Verdampfungrest,
(c) Trennen von Wasser, Essigsäure, Furfural und des Gemisches aus Ameisensäure und Essigsäure aus dem flüchtigen Teil und gegebenenfalls einem Teil der verdampften Gemische aus der Verdampfung (a) durch Destillation, wobei die Destillation einen azeotropen Extraktivdestillationsschritt durch Verwendung des in dem Verfahren gebildeten und rückgewonnenen Furfurals einschließt,
(d) Rückführen des Wassers zu der Verarbeitung von Faserbrei, Rückführen eines Teils des Furfurals zu der Destillation in Schritt (c), Rückführen des Gemisches aus Ameisensäure und Essigsäure in die Kochstufe und/oder Waschstufe und Rückgewinnen des Restes von Furfural und der Essigsäure,
**dadurch gekennzeichnet, dass** die Verdampfung (a) zumindest teilweise als reaktive Verdampfung bei einer Temperatur von 50 bis 200 °C durch Rückführung der verbrauchten Kochlauge in den internen Kreislauf eines oder mehrerer Verdampfer ausgeführt wird, wodurch mehr Furfural, Ameisensäure und Essigsäure aus den gelösten organischen Stoffen, die in der Kochlauge enthalten sind, und/oder aus darin enthaltenen, chemisch gebundenen Säuren gebildet werden, wobei das Verfahren vor dem Trennungsschritt (b) Schritt (a0) enthält, in welchem die Reaktion des Verdampfungskonzentrats ohne Verdampfung zugelassen wird und welcher in Verbindung mit der reaktiven Verdampfung in einem getrennten Raum durchgeführt wird, der mit dem internen Kreislauf des bzw. der Verdampfer verbunden ist.

2. Verfahren nach Anspruch 1, **dadurch gekennzeichnet, dass** die reaktive Verdampfung in Schritt (a) bis zu einem Trockenfeststoffgehalt von 20 bis 95 %, vorteilhafterweise 50 bis 95 % durchgeführt wird.

3. Verfahren nach Anspruch 1, **dadurch gekennzeichnet, dass** die Verdampfung bei einer Temperatur über 90 °C durchgeführt wird.

4. Verfahren nach Anspruch 3, **dadurch gekennzeichnet, dass** die Verdampfung bei einer Temperatur von 90 bis 160 °C, vorteilhafterweise 100 bis 140 °C durchgeführt wird.

5. Verfahren nach einem der vorhergehenden Ansprüche, **dadurch gekennzeichnet, dass** die Verweilzeit in dem Verdampfer 0,5 min bis 24 h, vorteilhafterweise 30 min bis 5 h beträgt.

6. Verfahren nach einem der vorhergehenden Ansprüche, **dadurch gekennzeichnet, dass** es ferner einen Vorkonzentrationsschritt vor der reaktiven Verdampfung in Schritt (a) enthält.

7. Verfahren nach Anspruch 6, **dadurch gekennzeichnet, dass** die Vorkonzentration bei einer Temperatur von 45 bis 110 °C durchgeführt wird.

8. Verfahren nach einem der vorhergehenden Ansprüche, **dadurch gekennzeichnet, dass** vor oder während der reaktiven Verdampfung (a) das Verfahren Schritt (a1) enthält, in welchem Wasser oder einen Säure/Wassergemisch in Form einer Flüssigkeit oder eines Dampfes zu dem Verdampfungskonzentrat zugegeben wird.

9. Verfahren nach Anspruch 8, **dadurch gekennzeichnet, dass** das Säure/Wassergemisch Filtrat aus dem Waschwasser des Faserbreis ist.

10. Verfahren nach Anspruch 9, **dadurch gekennzeichnet, dass** vor dem Waschen mit Wasser der Faserbrei mit einer Säure oder einem Säuregemisch gewaschen wurde und auf einen Trockenfeststoffgehalt von 30 bis 95 % verdampft wurde.

11. Verfahren einem der vorhergehenden Ansprüche, **dadurch gekennzeichnet, dass** ein azeotroper Extraktiv-Verdampfungsschritt des Destillationsschritts (c) als der erste Schritt der Destillation ausgeführt wird.

12. Verfahren nach Anspruch 11, **dadurch gekennzeichnet, dass** die Destillation in drei Kolonnen durchgeführt wird, so dass (1) von dem Boden der ersten Kolonne ein Gemisch aus Ameisensäure und Essigsäure und Furfural getrennt wird und vom Kopf ein Gemisch von Wasser und Furfural getrennt wird, (2) das Bodenprodukt der ersten Kolonne zu der zweiten Kolonne geleitet wird, von deren Boden Essigsäure und Furfural getrennt werden und von deren Kopf ein konzentriertes Gemisch aus Ameisensäure und Essigsäure getrennt wird, und (3) das Bodenprodukt der zweiten Kolonne zu der dritten Kolonne geleitet wird, von deren Boden Furfural getrennt wird und von deren Kopf Essigsäure, und ein Teil des von dem Boden getrennten Furfurals zu der ersten Kolonne zurückgeführt wird, wo es als ein Extraktionsmittel dient, und der Rest als ein Furfuralprodukt rückgewonnen wird.

13. Verfahren nach Anspruch 11 oder 12, **dadurch gekennzeichnet, dass** das Gemisch aus Ameisensäure und Essigsäure aus der ersten Kolonne als Seitenstrom getrennt wird.

14. Verfahren nach Anspruch 11, **dadurch gekennzeichnet, dass** der erste Destillationsschritt unter Verwendung einer Trennwandkolonne durchgeführt wird, aus welcher das Gemisch aus Ameisensäure und Essigsäure als Seitenstrom getrennt wird, Furfural von dem Boden der nachfolgenden Kolonne getrennt wird und Essigsäure von dem Kopf, und das Furfural zu der Trennwandkolonne rückgeführt wird, wo es als ein Extraktionsmittel dient.

15. Verfahren nach Anspruch 14, **dadurch gekennzeichnet, dass** der Vorfraktionierungsabschnitt der Trennwandkolonne durch eine separate Vorfraktionierungskolonne ersetzt wird.

16. Verfahren nach Anspruch 15, **dadurch gekennzeichnet, dass** das Kopfprodukt der Vorfraktionierungskolonne in den oberen Teil und das Bodenprodukt in den unteren Teil der nachfolgenden Kolonne eingespeist wird.

17. Verfahren nach einem der Ansprüche 11 bis 16, **dadurch gekennzeichnet, dass** das Kopfprodukt der ersten Kolonne durch Dekantieren in eine Wasserfraktion und eine Furfuralfraktion getrennt wird, die Furfuralfraktion zu der ersten Kolonne rückgeführt wird und die Wasserfraktion zu einer Kolonne geleitet wird, deren Bodenprodukt Wasser ist und deren Kopfprodukt ein Gemisch aus Wasser und Furfural ist.

18. Verfahren nach den Ansprüchen 12 bis 13 oder 17, **dadurch gekennzeichnet, dass** das Furfural von dem Boden der zweiten Kolonne und die Essigsäure von der zweiten Kolonne durch eine Seitenstrom-Rektifikationseinrichtung getrennt werden und das Furfural zu der ersten Kolonne rückgeführt wird, wo es als Extraktionsmittel dient.

19. Verfahren nach Anspruch 14 oder 17, **dadurch gekennzeichnet, dass** das Furfural von dem Boden der Trennwandkolonne und/oder die Essigsäure aus der Trennwandkolonne durch eine Seitenstrom-Rektifikationseinrichtung getrennt werden und das Furfural zu der Trennwandkolonne rückgeführt wird, wo es als ein Extraktionsmittel dient.

20. Verfahren nach einem der Ansprüche 12 bis 19, **dadurch gekennzeichnet, dass** das von dem Boden der zweiten Kolonne oder der dritten Kolonne oder der Trennwandkolonne getrennte Furfural vollständig zu der ersten Kolonne rückgeführt wird, wo es als Extraktionsmittel dient, und aus der Furfuralfraktion aus der Dekantierung das Produkt Furfural getrennt wird.

21. Verfahren nach Anspruch 20, **dadurch gekennzeichnet, dass** die Furfuralfraktion aus der Dekantierung zu einer Kolonne geleitet wird, deren Bodenprodukt Furfural ist und deren Kopfprodukt ein Gemisch aus Wasser und Furfural ist.

22. Verfahren nach Anspruch 17 oder 21, **dadurch gekennzeichnet, dass** das Gemisch aus Wasser und Furfural zu der Dekantierung rückgeführt wird.

23. Verfahren nach einem der Ansprüche 11 bis 22, **dadurch gekennzeichnet, dass** der Druck in den Destillationskolonnen 1 bis 5 bar beträgt.

24. Verfahren nach einem der Ansprüche 11 bis 23, **dadurch gekennzeichnet, dass** die Destillationskolonnen bei niedrigem Druck arbeiten.

25. Verfahren nach einem der vorhergehenden Ansprüche, **dadurch gekennzeichnet, dass** Schritt (b) auch die Trocknung umfasst.

26. Verfahren nach Anspruch 25, **dadurch gekennzeichnet, dass** die Trocknung bei einer Temperatur über 100 °C durchgeführt wird.

27. Verfahren nach Anspruch 25, **dadurch gekennzeichnet, dass** die Trocknung bei niedrigem Druck bei einer Temperatur unter 120 °C durchgeführt wird.

## Revendications

1. Procédé de production de furfural, de formation d'acide formique et d'acide acétique et de récupération d'acide formique et d'acide acétique dans un processus de formation de pâte à papier, qui utilise un mélange d'acides, contenant principalement de l'acide formique et de l'acide acétique, à titre de produits chimiques de cuisson,
le procédé comprenant un stade de formation de pâte, la séparation de la liqueur de cuisson de la pâte à papier, le lavage de la pâte à papier par un liquide de lavage, la séparation du liquide de lavage de la pâte à papier, la récupération des produits chimiques de cuisson et la séparation du furfural, et le procédé comprenant les étapes consistant à :
(a) évaporer la liqueur de cuisson noire obtenue à partir de la séparation de la liqueur de cuisson et de la pâte à papier, si bien que le mélange vaporisé obtenu est un mélange concentré d'acide formique et d'acide acétique, qui est au moins en partie renvoyé à la cuisson et éventuellement au lavage de la pâte à papier, et le résidu d'évaporation obtenu est un concentré d'évaporation, dans lequel de l'acide acétique, de l'acide formique et du furfural sont formés au cours de l'évaporation à partir du matériau organique contenu dans la liqueur de cuisson et/ou des acides chimiquement liés qui y sont contenus,
(b) séparer le concentré d'évaporation, si on le souhaite, en une partie volatile et un résidu d'évaporation,
(c) séparer l'eau, l'acide acétique, le furfural et le mélange d'acide formique et d'acide acétique de la partie volatile et éventuellement de la partie des mélanges vaporisés à partir de l'évaporation (a) par distillation, si bien que la distillation comprend une étape de distillation par extraction azéotropique en utilisant le furfural formé et récupéré dans le procédé,
(d) renvoyer l'eau au traitement de la pâte à papier, renvoyer une partie du furfural à la distillation de l'étape (c), renvoyer le mélange d'acide formique et d'acide acétique au stade de formation de pâte à papier et/ou au stade de lavage et récupérer le reste du furfural et de l'acide acétique,
**caractérisé en ce que** l'évaporation (a) est effectuée au moins en partie par évaporation réactive à une température de 50 à 200 °C en recyclant la liqueur de cuisson noire dans la circulation interne d'un ou plusieurs évaporateurs, de sorte qu'il se forme plus de furfural, d'acide formique et d'acide acétique à partir de la matière organique dissoute contenue dans la liqueur de cuisson et/ou à partir d'acides chimiquement liés qui y sont contenus, si bien que le procédé comprend, avant l'étape de séparation (b), l'étape (a0), dans laquelle le concentré d'évaporation peut réagir sans évaporation et qui est effectuée en liaison avec l'évaporation réactive dans un espace séparé raccordé à la circulation interne du ou des évaporateurs.

2. Procédé selon la revendication 1, **caractérisé en ce que** l'évaporation réactive de l'étape (a) est effectuée jusqu'à une teneur en solides secs de 20 à 95 %, avantageusement de 50 à 95 %.

3. Procédé selon la revendication 1, **caractérisé en ce que** l'évaporation est effectuée à une température de plus de 90°C.

4. Procédé selon la revendication 3, **caractérisé en ce que** l'évaporation est effectuée à une température de 90 à 160 °C, avantageusement de 100 à 140°C.

5. Procédé selon l'une quelconque des revendications précédentes, **caractérisé en ce que** le temps de séjour dans l'évaporateur est de 0,5 min à 24 h, avantageusement de 30 min à 5 h.

6. Procédé selon l'une quelconque des revendications précédentes, **caractérisé en ce qu'**il comprend en outre une étape de préconcentration avant l'évaporation réactive de l'étape (a).

7. Procédé selon la revendication 6, **caractérisé en ce que** la préconcentration est effectuée à une température de 45 à 110 °C.

8. Procédé selon l'une quelconque des revendications précédentes, **caractérisé en ce que**, avant ou pendant l'évaporation réactive (a), le procédé comprend l'étape (a1), dans laquelle de l'eau ou un mélange d'acide et d'eau est ajouté sous la forme d'un liquide ou d'une vapeur au concentré d'évaporation.

9. Procédé selon la revendication 8, **caractérisé en ce que** le mélange d' acide et d'eau est filtré par lavage à l'eau de la pâte à papier.

10. Procédé selon la revendication 9, **caractérisé en ce que**, avant le lavage à l'eau, la pâte à papier est lavée avec un acide ou un mélange d'acides et évaporée jusqu'à une teneur en solides secs de 30 à 95 %.

11. Procédé selon l'une quelconque des revendications précédentes, **caractérisé en ce qu'**un stade de distillation par extraction azéotropique de l'étape de distillation (c) est effectué comme première étape de la distillation.

12. Procédé selon la revendication 11, **caractérisé en ce que** la distillation est effectuée dans trois colonnes de sorte (1) qu'il soit séparé du fond de la première colonne un mélange d'acides formique et acétique et de furfural et qu'il soit séparé du sommet un mélange d'eau et de furfural, (2) que le produit de fond de la première colonne soit acheminé à la deuxième colonne du fond duquel sont séparés de l'acide acétique et du furfural et du sommet duquel est séparé un mélange concentré d'acides formique et acétique, et (3) que le produit de fond de la deuxième colonne soit conduit à la troisième colonne, du fond duquel est séparé du furfural et du sommet duquel est séparé de l'acide acétique, qu'une partie du furfural séparé du fond soit renvoyé à la première colonne pour servir d'agent d'extraction et que le reste soit récupéré comme produit de type furfural.

13. Procédé selon la revendication 11 ou la revendication 12, **caractérisé en ce que** le mélange d'acide formique et d'acide acétique est séparé de la première colonne sous la forme d'un courant latéral.

14. Procédé selon la revendication 11, **caractérisé en ce que** la première étape de distillation est effectuée en utilisant une colonne à cloisonnement, d'où le mélange d'acide formique et d'acide acétique est séparé sous la forme d'un courant latéral, du furfural est séparé du fond de la colonne suivante et de l'acide acétique du sommet et le furfural est renvoyé à la colonne à cloisonnement pour servir d'agent d'extraction.

15. Procédé selon la revendication 14, **caractérisé en ce que** la section de préfractionnement de la colonne à cloisonnement est remplacée par une colonne de préfractionnement séparée.

16. Procédé selon la revendication 15, **caractérisé en ce que** le produit du sommet de la colonne de préfractionnement est acheminé à la partie supérieure et le produit de fond à la partie inférieure de la colonne suivante.

17. Procédé selon l'une quelconque des revendications 11 à 16, **caractérisé en ce que** le produit du sommet de la première colonne est séparé en une fraction d'eau et une fraction de furfural par décantation, la fraction de furfural est renvoyée à la première colonne et la fraction d'eau est acheminée à une colonne, dont le produit de fond est de l'eau et le produit du sommet un mélange d'eau et de furfural.

18. Procédé selon les revendications 12 à 13 ou 17, **caractérisé en ce que** le furfural est séparé du fond de la deuxième colonne et l'acide acétique de la deuxième colonne par un rectificateur à courant latéral, et le furfural est renvoyé à la première colonne pour servir d'agent d'extraction.

19. Procédé selon la revendication 14 ou la revendication 17, **caractérisé en ce que** le furfural est séparé du fond de la colonne à cloisonnement et/ou l'acide acétique de la colonne à cloisonnement par un rectificateur à courant latéral et le furfural est renvoyé à la colonne à cloisonnement pour servir d'agent d'extraction.

20. Procédé selon l'une quelconque des revendications 12 à 19, **caractérisé en ce que** le furfural séparé du fond de la deuxième colonne ou de la troisième colonne ou de la colonne à cloisonnement est renvoyé complètement à la première colonne pour servir d'agent d'extraction et de la fraction de furfural provenant de la décantation est séparé le furfural.

21. Procédé selon la revendication 20, **caractérisé en ce que** la fraction de furfural provenant de la décantation est acheminée à une colonne dont le produit de fond est le furfural et le produit de sommet est un mélange d'eau et de furfural.

22. Procédé selon la revendication 17 ou 21, **caractérisé en ce que** le mélange d'eau et de furfural est renvoyé à la décantation.

23. Procédé selon l'une quelconque des revendications 11 à 22, **caractérisé en ce que** la pression dans les colonnes de distillation est de 1 à 5 bars.

24. Procédé selon l'une quelconque des revendications 11 à 22, **caractérisé en ce que** la colonne de distillation opère à faible pression.

25. Procédé selon l'une quelconque des revendications précédentes, **caractérisé en ce que** l'étape (b) comprend également un séchage.

26. Procédé selon la revendication 25, **caractérisé en ce que** le séchage est effectué à une température de plus de 100 °C.

27. Procédé selon la revendication 25, **caractérisé en ce que** le séchage est effectué à faible pression et à une température inférieure à 120 °C.
